# EUROPÄISCHE PATENTSCHRIFT

(11) **EP 3 090 189 B1**
(45) Veröffentlichungstag und Bekanntmachung des Hinweises auf die Patenterteilung: **04.12.2019**
(21) Anmeldenummer: 15707959.1
(22) Anmeldetag: 05.03.2015
(51) Int. Cl.: F16D 3/18

(54) **ZAHNKUPPLUNG**
GEAR COUPLING
ACCOUPLEMENT À DENTS

(30) Priorität: 12.03.2014 DE 102014204590
(43) Veröffentlichungstag der Anmeldung: 09.11.2016
(73) Patentinhaber: Flender GmbH, 46395 Bocholt (DE)
(72) Erfinder: HOVES, Marc, 46395 Bocholt (DE); JANSEN, Andre, 46325 Borken (DE)
(74) Vertreter: Maier, Daniel Oliver
(86) Internationale Anmeldenummer: PCT/EP2015/054622
(87) Internationale Veröffentlichungsnummer: WO 2015/135832

(56) Entgegenhaltungen:
- WO-A1-2010/046003
- DE-U1-202014 007 550
- JP-A- H05 240 259
- US-A- 3 402 572

## Beschreibung

Die vorliegende Erfindung betrifft eine Zahnkupplung. Zahnkupplungen sind drehstarre Kupplungen, die über ineinander gefügte Außen- und Innenverzahnungen ein Drehmoment zwischen zwei Maschinenwellen übertragen. Die doppelgelenkigen ZAPEX-Zahnkupplungen der Anmelderin, die im Siemens-Katalog MD 10.1 "FLENDER Standardkupplungen" 2011 dargestellt sind, bestehen aus zwei außenverzahnten Nabenteilen, die jeweils auf eine Maschinenwelle aufgesetzt werden. Die Außenverzahnung greift jeweils in einen Mitnehmerring ein, der eine entsprechende Innenverzahnung aufweist. Über zwei Flansche mit Passschrauben werden die Mitnehmerringe verbunden. Die ZAPEX-Kupplungen sind in der Lage, Winkelabweichungen, Parallel- und Axialversatz der Maschinenwellen auszugleichen. US 3 402 572 A1 offenbart eine Zahnkupplung (10) zur Verbindung einer Antriebs- und einer Abtriebswelle, umfassend: - einen mit der Antriebswelle zu verbindenden ersten Kupplungsabschnitt (12,16A) und einen mit der Abtriebswelle zu verbindenden zweiten Kupplungsabschnitt (14,16B), wobei die beiden Kupplungsabschnitte jeweils eine Mitnahmeverzahnung mit einer Innenverzahnung (24) und einer darin eingreifenden Außenverzahnung (20) aufweisen.

Aufgabe der vorliegenden Erfindung ist es, eine verbesserte Zahnkupplung anzugeben.

Diese Aufgabe wird erfindungsgemäß durch eine Zahnkupplung mit den in Anspruch 1 angegebenen Merkmalen gelöst.

Die Zahnkupplung dient zur Verbindung einer Antriebs- und einer Abtriebswelle. Die Zahnkupplung umfasst einen ersten und einen zweiten Kupplungsabschnitt. Der erste Kupplungsabschnitt ist mit der Antriebswelle zu verbinden, wohingegen der zweite Kupplungsabschnitt mit der Abtriebswelle zu verbinden ist. Die beiden Kupplungsabschnitte weisen jeweils eine Mitnahmeverzahnung mit einer Innen- und einer darin eingreifenden Außenverzahnung auf. Die Zahnkupplung umfasst außerdem ein Zwischenrohr aus einem elektrisch isolierenden Material. Das Zwischenrohr verbindet die beiden Kupplungsabschnitte miteinander. Außerdem isoliert das Zwischenrohr die beiden Kupplungsabschnitte elektrisch voneinander.

Der Erfindung basiert auf der Erkenntnis, dass das Zwischenrohr aus elektrisch isolierendem Material eine einfache und wirksame Möglichkeit bietet, eine elektrisch isolierende Zahnkupplung bereitzustellen. Dabei ist das Zwischenrohr in der Lage, höhere Drehmomente zu übertragen als es mit herkömmlichen isolierenden Bauelementen, z.B. Schraubenhülsen und Unterlegscheiben aus Kunststoff oder Gummi, die zur elektrischen Isolierung von Zahnkupplungen eingesetzt werden, bisher möglich war.

Vorteilhafte Ausgestaltungen und Weiterbildungen der Erfindung sind in den abhängigen Ansprüchen angegeben.

Gemäß einer bevorzugten Ausgestaltung der Erfindung besteht das Zwischenrohr aus faserverstärktem Kunststoff. Dabei kann es sich um glasfaserverstärkten Kunststoff (GFK) oder kohlenstofffaserverstärkten Kunststoff (CFK) handeln. Von Vorteil ist dabei, dass faserverstärkter Kunststoff sowohl eine relativ gute elektrische Isolationswirkung als auch eine hohe mechanische Beanspruchbarkeit aufweist.

Gemäß der Erfindung umschließt einer der Kupplungsabschnitte das Zwischenrohr an seinem Innenumfang. Zusätzlich umschließt der andere Kupplungsabschnitt das Zwischenrohr an seinem Außenumfang. Von Vorteil ist dabei, dass der oder die Kupplungsabschnitte das Zwischenrohr gegen mechanische Beschädigungen schützen. Beispielsweise können beim Einsatz der Zahnkupplung im Bahnbereich die dort üblichen Steinschläge das Zwischenrohr nicht beschädigen.

Gemäß einer bevorzugten Ausgestaltung der Erfindung weist mindestens einer der beiden Kupplungsabschnitte eine auf der An- bzw. Abtriebswelle anzuordnende Nabe auf. Von Vorteil ist dabei, dass die Welle-Nabe-Verbindung eine platzsparende Anordnung der Zahnkupplung erlaubt.

Gemäß einer bevorzugten Ausgestaltung der Erfindung weist der mindestens eine Kupplungsabschnitt, welcher die Mitnahmeverzahnung aufweist, eine lösbare Verbindung auf. Dabei unterteilt die lösbare Verbindung den Kupplungsabschnitt in einen ersten, die Mitnahmeverzahnung umfassenden Teil und einen zweiten, an das Zwischenrohr angrenzenden Teil. Von Vorteil ist dabei, dass die Mitnahmeverzahnung abgenommen werden kann, ohne dass die Zwischenrohr-Verbindung angetastet werden muss.

Gemäß einer bevorzugten Ausgestaltung der Erfindung ist der erste Kupplungsabschnitt in zwei Teile mit je einem Flansch unterteilt, wobei die Flansche durch Schrauben miteinander lösbar verbunden sind. Von Vorteil ist dabei, dass die Kupplung einfach in mehrere Teile getrennt werden kann, ohne dass die Zwischenrohr-Verbindung angetastet werden muss.

Gemäß einer bevorzugten Ausgestaltung der Erfindung weist der erste und der zweite Kupplungsabschnitt je eine Nabe zur Anordnung auf der Antriebs- bzw. der Abtriebswelle und je eine Mitnahmeverzahnung auf. Von Vorteil ist dabei, dass die Welle-Nabe-Verbindung eine platzsparende Anordnung der Zahnkupplung erlaubt. Von Vorteil dabei ist außerdem, dass die Kupplung auf diese Weise einen Winkelversatz der An- und Abtriebswelle ausgleichen kann.

Gemäß einer bevorzugten Ausgestaltung der Erfindung ist mindestens einer der Kupplungsabschnitte über eine Rutschkupplung mit der An- bzw. Abtriebswelle verbunden. Von Vorteil ist dabei, dass eine Drehmoment-Überlast verhindert werden kann.

Im Folgenden wird die Erfindung anhand eines Ausführungsbeispiels unter Zuhilfenahme der beiliegenden Zeichnungen erläutert. Es zeigt jeweils schematisch und nicht maßstabsgetreu:
- Fig. 1: einen Schnitt einer Zahnkupplung; und
- Fig. 2: eine Schrägansicht der Zahnkupplung.

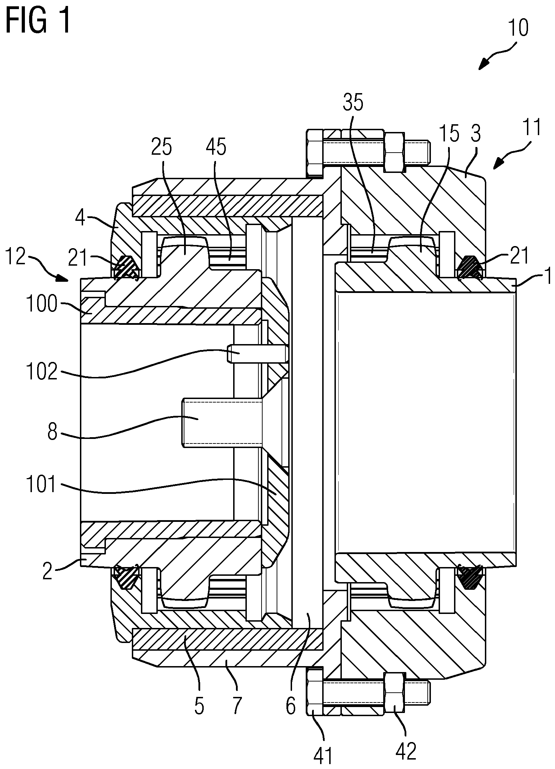

Fig. 1 zeigt einen Schnitt einer Zahnkupplung 10, die zur Verbindung einer Antriebs- und einer Abtriebswelle (nicht dargestellt) dient. Die Antriebswelle kann z.B. eine Motorwelle sein; die Abtriebswelle kann z.B. eine Getriebewelle sein. Die Zahnkupplung 10 umfasst einen ersten, z.B. motorseitigen, Kupplungsabschnitt 11 zur Anordnung auf einer Antriebswelle sowie einen zweiten, z.B. getriebeseitigen, Kupplungsabschnitt 12 zur Anordnung auf einer Abtriebswelle.

Der erste Kupplungsabschnitt 11 umfasst eine erste Kupplungsnabe 1 zur Anordnung auf einer Antriebswelle. Die erste Kupplungsnabe 1 weist eine entlang dem Nabenaußenumfang umlaufende Außenverzahnung 15 auf. Der erste Kupplungsabschnitt 11 umfasst außerdem einen ersten Mitnehmerring 3 mit einer entlang dem Ringinnenumfang umlaufenden Innenverzahnung 35. Dabei greifen die Außen- und Innenverzahnung 15, 35 des ersten Kupplungsabschnitts 11 ineinander und bilden eine Drehmoment übertragende Mitnahmeverzahnung.

An der dem zweiten Kupplungsabschnitt 12 zugewandten Stirnseite des ersten Mitnehmerring 3 ist ein Flansch ausgebildet, der an einem korrespondierenden Flanschelement 7 anliegt. Der erste Mitnehmerring 3 und das Flanschelement 7 weisen entlang ihrem äußeren Umfang miteinander fluchtende achsparallele Lochbohrungen zur Aufnahme von Schrauben auf, in welche Passschrauben 41 mit Schraubenmuttern 42 gesteckt sind. Auf diese Weise sind der erste Mitnehmerring 3 und das Flanschelement 7 lösbar miteinander verbunden.

Das Flanschelement 7 weist einen Ringflansch auf, der die Außenseite eines GFK-Zwischenrohrs 5, d.h. eines Rohrs aus einem elektrisch isolierenden Material, vollständig umgibt, sowie die motorseitige Stirnseite des GFK-Zwischenrohrs 5 bedeckt. An der Innenseite des Zwischenrohrs 5 liegt ein zweiter Mitnehmerring 4, nämlich der Mitnehmerring 4 des zweiten Kupplungsabschnitts 12, an. Dabei bedeckt der zweite Mitnehmerring 4 die Innenseite des Zwischenrohrs 5 vollständig, sowie ungefähr die Hälfte der getriebeseitigen Stirnseite des GFK-Zwischenrohrs 5. Auf diese Weise ist das Zwischenrohrs 5 fast vollständig bedeckt und somit gegen äußere mechanische Beschädigungen geschützt.

Analog zu dem ersten Kupplungsabschnitt 11 umfasst der zweite Kupplungsabschnitt 12 eine zweite Kupplungsnabe 2 zur Anordnung auf einer Abtriebswelle. Die zweite Kupplungsnabe 2 weist eine entlang dem Nabenaußenumfang umlaufenden Außenverzahnung 25 auf. Der zweite Kupplungsabschnitt 12 umfasst außerdem den zweiten Mitnehmerring 4 mit einer entlang dem Ringinnenumfang umlaufenden Innenverzahnung 45. Dabei greifen die Außen- und Innenverzahnung 25, 45 des zweiten Kupplungsabschnitts 12 ineinander und bilden eine Drehmoment übertragende Mitnahmeverzahnung. Die zweite Kupplungsnabe 2 sitzt auf einer Rutschbuchse 100, welche ihrerseits auf dem kegeligen Wellenende der Abtriebswelle, z.B. durch Ölpressverband, montiert ist. Zur Axialsicherung der zweiten Kupplungsnabe 2 und der Rutschbuchse 100 ist eine mit einer Schraube 8 sicherbare Endscheibe 101 vorgesehen, welche am Wellenende der Abtriebswelle angeordnet wird; die Endscheibe 101 beaufschlagt sowohl die zweite Kupplungsnabe 2 als auch die Rutschbuchse 100 stirnseitig. Um eine Drehung der Endscheibe 101 zu verhindern, ist ein axial verlaufender Verdrehsicherungsstift 102 in eine Bohrung der Endscheibe 101 eingesteckt; dieser Stift 102 ist in eine damit fluchtende Bohrung in der Stirnseite der Abtriebswelle schiebbar.

An ihren außenliegenden Stirnseiten weisen die Mitnehmerringe 3, 4 je einen in Richtung zur Wellenachse vorspringenden Ringwulst auf, an dessen innenliegendem Umfang eine umlaufende Dichtung 21 angeordnet ist. Dabei liegen die Dichtungen jeweils an den Kupplungsnaben 1, 2 an. Die Dichtungen 21 dienen einerseits dem Schutz der Mitnahmeverzahnungen vor Schmutz, etc.; andererseits halten sie Schmiermittel in den Mitnahmeverzahnungen.

Der erste 11 und der zweite 12 Kupplungsabschnitt, die in der Regel aus metallischem Material hergestellt sind, sind ausschließlich über das elektrisch isolierende Zwischenrohr 5 miteinander verbunden, da sich zwischen den Wellenenden ein Luftraum 6 befindet. Auf diese Weise kann ein Stromdurchgang durch die Zahnkupplung 10 verhindert werden.

Die Kupplungsnaben 1, 2 sind durch Aufschrumpfen, Verkeilen oder in anderer Weise drehfest mit den Enden der beiden miteinander zu kuppelnden Wellen verbunden; es ist z.B. möglich, dass die Kupplungsnaben 1, 2 auf den kegeligen Wellenenden im Ölpressverband fixiert sind.

Das Drehmoment wird über die beiden Mitnahmeverzahnungen, auch als Kupplungsverzahnungen bekannt, übertragen. Die Verzahnung der Mitnahmeverzahnungen ist ballig ausgeführt, so dass eine Winkelverlagerung pro Verzahnungsebene möglich ist. Über den axialen Abstand der Verzahnungsebenen wird der Ausgleich von Radialversatz ermöglicht. Die Innenverzahnung 35, 45 der mitnehmerringe 3, 4 ist wesentlich breiter ausgeführt als die Außenverzahnung 15, 25 der Nabenteile 1, 2. Damit kann ein vergleichsweise großer Axialversatz zugelassen werden.

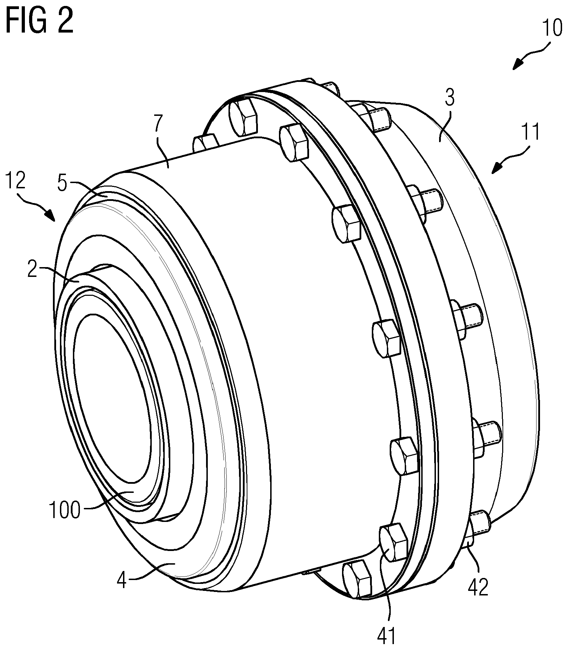

Fig. 2 zeigt eine Schrägansicht der in Fig. 1 dargestellten Zahnkupplung 10. Bezüglich der erkennbaren Bauteile wird auf die entsprechenden Erläuterungen zu Fig. 1 verwiesen.

Obwohl die Erfindung im Detail durch das Ausführungsbeispiel näher illustriert und beschrieben wurde, so ist die Erfindung nicht durch das offenbarte Beispiel eingeschränkt.

## Patentansprüche

1. Zahnkupplung (10) zur Verbindung einer Antriebs- und einer Abtriebswelle, umfassend
- einen mit der Antriebswelle zu verbindenden ersten Kupplungsabschnitt (11) und einen mit der Abtriebswelle zu verbindenden zweiten Kupplungsabschnitt (12), wobei die beiden Kupplungsabschnitte (11, 12) jeweils eine Mitnahmeverzahnung mit einer Innenverzahnung (35, 45) und einer darin eingreifenden Außenverzahnung (15, 25) aufweisen, und **dadurch gekennzeichnet, dass**
- ein die beiden Kupplungsabschnitte (11, 12) miteinander verbindendes und elektrisch voneinander isolierendes Zwischenrohr (5) aus einem elektrisch isolierenden Material umfasst, wobei einer der Kupplungsabschnitte (12) das Zwischenrohr (5) an seinem Innenumfang und der andere Kupplungsabschnitt (11) das Zwischenrohr (5) an seinem Außenumfang umschließt.

2. Zahnkupplung nach Anspruch 1, wobei das Zwischenrohr (5) aus faserverstärktem Kunststoff besteht.

3. Zahnkupplung nach einem der vorhergehenden Ansprüche, wobei mindestens einer der beiden Kupplungsabschnitte (11, 12) eine auf der An- bzw. Abtriebswelle anzuordnende Nabe (1, 2) aufweist.

4. Zahnkupplung nach einem der vorhergehenden Ansprüche, wobei der mindestens eine die Mitnahmeverzahnung aufweisende Kupplungsabschnitt (11, 12) eine lösbare Verbindung (41, 42) aufweist, welche den Kupplungsabschnitt (11, 12) in einen ersten, die Mitnahmeverzahnung umfassenden Teil (3) und einen zweiten, an das Zwischenrohr (5) angrenzenden Teil (7) unterteilt.

5. Zahnkupplung nach einem der vorhergehenden Ansprüche, wobei der erste Kupplungsabschnitt (11) in zwei Teile mit je einem Flansch unterteilt ist, wobei die Flansche durch Schrauben (41, 42) miteinander lösbar verbunden sind.

6. Zahnkupplung nach einem der vorhergehenden Ansprüche, wobei der erste und der zweite Kupplungsabschnitt (11, 12) je eine Nabe (1, 2) zur Anordnung auf der Antriebs- bzw. der Abtriebswelle und je eine Mitnahmeverzahnung aufweisen.

7. Zahnkupplung nach einem der vorhergehenden Ansprüche, wobei mindestens einer der Kupplungsabschnitte (11, 12) über eine Rutschkupplung (100) mit der An- bzw. Abtriebswelle verbunden ist.

## Claims

1. Gear coupling (10) for connecting a drive shaft and an output shaft, comprising
- a first coupling portion (11) to be connected to the drive shaft and a second coupling portion (12) to be connected to the output shaft, wherein the two coupling portions (11, 12) each have a driver toothing with an internal toothing (35, 45) and an external toothing (15, 25) which engages therein, and **characterised in that**
- an intermediate tube (5) connecting the two coupling portions (11, 12) with one another and electrically insulating the same from one another is made of an electrically insulating material, wherein one of the coupling portions (12) surrounds the inner periphery of the intermediate tube (5) and the other coupling portion (11) surrounds the outer periphery of the intermediate tube (5).

2. Gear coupling according to claim 1, wherein the intermediate tube (5) is made of fiber-reinforced plastic.

3. Gear coupling according to one of the preceding claims, wherein at least one of the two coupling portions (11, 12) has a hub (1, 2) to be arranged on the drive shaft or output shaft.

4. Gear coupling according to one of the preceding claims, wherein the at least one coupling portion (11, 12) having the driver toothing has a detachable connection (41, 42), which divides the coupling portion (11, 12) into a first part (3) comprising the driver toothing and a second part (7) adjoining the intermediate tube (5).

5. Gear coupling according to one of the preceding claims, wherein the first coupling portion (11) is divided into two parts which each have a flange, wherein the flanges are detachably connected to one another by means of screws (41, 42) .

6. Gear coupling according to one of the preceding claims, wherein the first and the second coupling portion (11, 12) each have a hub (1, 2) for arrangement on the drive shaft or output shaft and each have a driver toothing.

7. Gear coupling according to one of the preceding claims, wherein at least one of the coupling portions (11, 12) is connected to the drive shaft or output shaft by way of a slipping clutch (100).

## Revendications

1. Accouplement (10) à dents pour relier un arbre menant et un arbre mené, comprenant
- une première partie (11) d'accouplement à relier à l'arbre menant et une deuxième partie (12) d'accouplement à relier à l'arbre mené, les deux parties (11, 12) d'accouplement ayant chacune une denture d'entraînement ayant une denture (35, 45) intérieure et une denture (15, 25) extérieure s'y engrenant et **caractérisé en ce que**
- il comprend un tube (5) intermédiaire en un matériau isolant du point de vue électrique, reliant entre elles les deux parties (11, 12) d'accouplement et les isolant l'une de l'autre électriquement, l'une des parties (12) d'accouplement entourant le tube (5) intermédiaire sur son pourtour intérieur et l'autre partie (11) d'accouplement entourant le tube (5) intermédiaire sur son pourtour extérieur.

2. Accouplement à dents suivant la revendication 1, dans lequel le tube (5) intermédiaire est en matière plastique renforcée par de la fibre.

3. Accouplement à dents suivant l'une des revendications précédentes, dans lequel au moins l'une des deux parties (11, 12) d'accouplement a un moyeu (1, 2) associé à l'arbre menant ou, respectivement, à l'arbre mené.

4. Accouplement à dents suivant l'une des revendications précédentes, dans lequel la au moins une partie (11, 12) d'accouplement ayant la denture d'entraînement a une liaison (41, 42) amovible, qui subdivise la partie (11, 12) d'accouplement en une première partie (3) comprenant la denture d'entraînement et en une deuxième partie (7) voisine du tube (5) intermédiaire.

5. Accouplement à dents suivant l'une des revendications précédentes, **caractérisé en ce que** la première partie (11) d'accouplement est subdivisée en deux parties et en, respectivement, une bride, les brides étant reliées de manière amovible l'une à l'autre par des vis (41, 42).

6. Accouplement à dents suivant l'une des revendications précédentes, dans lequel la première et la deuxième parties (11, 12) d'accouplement ont chacune un moyeu (1, 2) à mettre sur les arbres menant et mené et chacune une denture d'entraînement.

7. Accouplement à dents suivant l'une des revendications précédentes, dans lequel au moins l'une des parties (11, 12) d'accouplement est reliée à l'arbre menant ou, respectivement, à l'arbre mené par un accouplement (100) à glissement.
